**Europäisches Patentamt**

**European Patent Office**

**Office européen des brevets**

(19)

(11) Numéro de publication: **0 110 788**
**B1**

(12) **FASCICULE DE BREVET EUROPÉEN**

(45) Date de publication du fascicule du brevet:
**13.08.86**

(21) Numéro de dépôt: **83402284.0**

(22) Date de dépôt: **25.11.83**

(51) Int. Cl.⁴: **A 01 B 3/40,** A 01 B 15/14,
A 01 B 59/048

(54) Dispositif de liaison entre l'age d'une charrue réversible et le système d'attelage d'un tracteur.

(30) Priorité: **29.11.82 FR 8220237**
**29.11.82 FR 8220238**

(43) Date de publication de la demande:
**13.06.84 Bulletin 84/24**

(45) Mention de la délivrance du brevet:
**13.08.86 Bulletin 86/33**

(84) Etats contractants désignés:
**AT BE CH DE FR GB IT LI LU NL SE**

(56) Documents cité:
**CH-A-215 605**
**DE-A-2 643 308**
**DE-B-1 216 597**
**DE-B-1 242 929**
**FR-A-1 397 999**
**FR-A-2 366 779**
**FR-A-2 435 888**
**FR-E-94 822**

(73) Titulaire: **Naud, Pierre, R.D. 752 "La Joussalmière",**
**F-49600 Beaupreau Andreze (FR)**

(72) Inventeur: **Naud, Pierre, R.D. 752 "La**
**Joussalmière", F-49600 Beaupreau Andreze (FR)**

(74) Mandataire: **Amaudric du Chaffaut, François, c/o**
**Cabinet Harlé & Phélip 21, rue de la**
**Rochefoucauld, F-75009 Paris (FR)**

LIBER, STOCKHOLM 1986

EP 0 110 788 B1

## Description

La présente invention concerne les dispositifs de liaison disposés entre l'age d'une charrue et le système d'attelage trois points d'un tracteur; elle concerne plus particulièrement les dispositifs de liaison pour charrues reversibles portées ou semi-portées disposées à l'arrière et/ou à l'avant d'un tracteur.

Les charrues réversibles portées ou semi-portées comportent un nombre de socs de plus en plus important du fait de la puissance sans cesse croissante des tracteurs. Elles ont cependant toujours gardé, au niveau de la liaison age-tracteur, un dispositif de conception classique calqué sur l'avant des charrues brabant doubles.

On emploie généralement le terme avant-train pour désigner le dispositif de liaison age-tracteur étant donné que jusqu'à maintenant les charrues étaient essentiellement tirées par le tracteur. Ce terme avant-train ne convient évidemment pas pour les nouvelles charrues réversibles qui ont fait récemment leur apparition à l'avant des tracteurs. Aussi, compte-tenu du fait que l'invention s'applique aussi bien aux charrues tirées qu'aux charrues poussées, le terme avant-train ne sera pas employé mais remplacé par une expression plus large: dispositif de liaison.

Les dispositifs de liaison connus pour charrues réversibles sont constitués:

- d'une tête d'attelage solidaire des barres du système de relevage trois points du tracteur;
- d'un palier disposé sensiblement au centre de la tête;
- d'un arbre solidaire de l'age pivotant dans le palier sous l'effet d'un dispositif de retournement.

Le palier est le plus souvent constitué d'un fourreau ou écammoussure solidaire de la tête, dans lequel tourillonne une fusée ou un arbre, directement solidaire de l'age ou solidaire d'un chassis qui supporte l'age. L'arbre tourillonne, dans certains montages entre deux roulements ou, comme décrit dans la demande de brevet FR 2.435.888 l'arbre tourillonne dans un roulement unique de diamètre plus important, ce qui permet de reduire la longueur de la charrue.

Ces différents montages connus présentent l'inconvenient de mal supporter les efforts engendrés par les charrues polysocs attelées à des tracteurs de grande puissance. En effet, en plus des efforts engendrés par le labour, le palier central doit, par son axe unique de faible diamètre, supporter des porte-à-faux de plus en plus importants pendant les manoeuvres de retournement de l'age et aussi pendant le transport de la charrue. Les moments de force qui sont ainsi concentrés sur le palier central de la tête provoquent des déformations de la tête et parfois des ruptures qu'il devient de plus en plus difficile d'enrayer.

Un autre type de dispositif de liaison, décrit dans la demande de brevet DE 2.643.308, comporte une tête munie d'un palier en forme de couronne à billes de grand diamètre. La couronne extérieure est solidaire de l'attelage du tracteur par l'intermédiaire d'un flasque en forme de losange et, la couronne intérieure est solidaire d'un dispositif d'attelage automatique d'outils et notamment de charrues réversibles. Ce dispositif évite la concentration des efforts au centre de la tête; il les répartit sur une circonférence définie par la couronne à billes.

Toutefois, ce type de montage, avec une couronne à billes ou à galets, présente des inconvénients, qui rendent difficile son utilisation dans le secteur du matériel agricole du type charrue. Les couronnes à billes ou à galets sont d'une part d'un coût élevé, et d'autre part, elles se détériorent rapidement si les chemins de roulement se déforment. Ce type de tête d'attelage n'empêche pas non plus une certaine concentration des efforts, venant de l'age, au niveau de la tête; les efforts sont concentrés dans un plan qui est sensiblement le plan général de la tête perpendiculaire à l'axe de retournement de la charrue.

La présente invention vise à remédier à ces inconvénients; elle propose un dispositif de liaison comportant des moyens pour disperser les efforts venant de l'age, les distribuant directement au moins au niveau des extrémités rotuliennes des barres inférieures du système d'attelage du tracteur.

L'invention a également pour objet un dispositif de liaison qui comporte des moyens propres à assurer un encastrement de l'age entre deux plans parallèles à l'axe longitudinal de retournement de la charrue.

Le dispositif de liaison, selon l'invention, est constitué d'un ensemble comprenant une tête d'attelage solidaire du système d'attelage trois points du tracteur et un support solidaire de l'age, mobile en rotation dans la tête selon l'axe longitudinal de retournement; la tête d'attelage comporte des moyens d'ancrage sur les extrémités rotuliennes des barres du système d'attelage du tracteur et elle comporte intérieurement un chemin de roulement de grand diamètre, dans lequel sont disposés des organes de guidage et de roulement assurant une liaison en rotation autour de l'axe longitudinal de retournement entre la tête et le support de l'age, certains de ces organes de guidage et de roulement étant disposés sensiblement en face des moyens d'ancrage de la tête sur le système d'attelage du tracteur dans chaque configuration de travail de la charrue; le support solidaire de l'age se compose d'un ensemble de bras dont la longueur est de l'ordre de deux fois le diamètre du chemin de roulement de la tête et dont l'enveloppe forme un tronc de cône centré sur l'axe longitudinal de retournement, à chaque position de travail de la charrue, un bras est situé en face de chaque moyen d'ancrage de la tête sur le système d'attelage, sur ce bras étant montés lesdits certains organes de guidage et de roulement.

Selon une disposition préférentielle, les bras-supports sont constitués de deux caissons dont l'enveloppe extérieure forme sensiblement un tronc de cône; ces caissons sont espacés au niveau de la tête par une entretoise; ils s'étendent de la tête d'attelage jusqu'à un axe solidaire de l'age sur une longueur de l'ordre de deux fois le diamètre du chemin de roulement de la tête, permettant un véritable encastrement de l'age.

Selon une autre disposition préférentielle, le chemin de roulement de la tête d'attelage circulaire a une section en U tourne vers l'intérieur, les moyens d'ancrage de la tête circulaire sur le système d'attelage du tracteur sont disposés directement sur le contour extérieur du chemin de roulement.

Selon un premier mode de réalisation les organes assurant la liaison du support avec la tête, sont de deux ordres:

- des éléments de guidage du type roulement à billes, montés sur des pivots solidaires des caissons, en contact avec les ailes du U;

- des éléments de guidage du type roulement à billes, montés dans des chapes sur les caissons, roulant sur le fond du U.

Il est apparu que, dans la technique de réalisation de la tête et plus particulièrement dans la réalisation du chemin de roulement, il était relativement onéreux de réaliser un chemin de roulement précis surtout pour les éléments de guidage qui assurent le centrage du support dans la tête, lorsque la tête est réalisée par la technique dite de mécano-soudure.

Pour pallier à cet inconvénient, la tête d'attelage circulaire selon un deuxième mode de réalisation, comporte une structure de centrage du support de l'age, coopérant avec un organe de centrage disposé sur l'entretoise des caissons supportant l'age.

Il est connu, par le brevet CH 215.605, de réaliser une charrue dont l'age est lié à la tête d'attelage au moyen d'un arbre central et d'une couronne de butée à billes. Dans cette disposition, l'arbre assure, en plus du centrage, la liaison partielle en translation de l'age avec la tête. Cette disposition a pour effet de concentrer les efforts venant de l'age au centre de la tête. Le premier mode de réalisation évite cette concentration des efforts au centre de la tête, le deuxième mode aussi, ils réalisent une transmission directe ou quasi directe des efforts venant de l'age vers le système d'attelage du tracteur et au moins vers les barres d'attelage inférieures dudit tracteur. La structure de centrage du support dans la tête ne transmet pas les efforts venant de l'age à la tête circulaire.

Selon ce deuxième mode de réalisation la structure de centrage du support de l'age est constituée d'un moyeu supporté par des bras solidaires de la tête circulaire; l'organe de centrage solidaire du support de l'age, est constitué d'un arbre libre en translation dans le moyeu de la tête. Selon une disposition préférentielle, les bras supportant le moyeu sont soudés sur les flancs du chemin de roulement de la tête.

Un autre objet de l'invention est de réaliser un ensemble pour labour constitué d'une charrue réversible disposée à l'avant et une charrue réversible disposée à l'arrière du tracteur, ensemble dans lequel le dispositif de liaison de la charrue avant comporte une tête circulaire et des caissons d'encastrement de l'age dont l'extrémité opposée à la tête est déportée latéralement par rapport à l'axe de retournement de la charrue; dans cette disposition l'age de la charrue est muni d'une poutre disposée latéralement; cette poutre est encastrée entre les extrémités des caissons et elle comporte l'axe principal de pivotement de l'age; l'extrémité de l'axe, côté tête, est encastrée entre les caissons.

Un autre objet de l'invention est d'offrir des moyens simplifiés pour faire varier le positionnement de l'age par rapport à l'axe longitudinal de la charrue. Ces variations visent généralement à adapter la charrue à son tracteur ou encore au terrain et on règle ainsi le déport et le dévers de la charrue. Toutefois, pour les charrues polysocs, on est amené, en plus de ces derniers réglages, à faire pivoter l'age pour le ramener sensiblement sur l'axe de retournement avant d'effectuer le retournement proprement dit de la charrue. Cette operation, nécessaire pour les charrues réversibles avant ou arrière à grand déport, permet une diminution importante des efforts dus à cette manoeuvre de retournement.

On trouve de nombreuses dispositions pour le réglage du déport et du dévers des charrues. Le brevet FR 1.397.999 par exemple et son addition 94.822 décrivent un dispositif permettant un déport latéral de l'age au moyen d'un système vis/écrou monte sur le support de l'age et au moyen d'une bielle de liaison réglable qui modifie le dévers.

La présente invention propose également un dispositif de réglage du déport et du dévers de la charrue; ce dispositif étant adapté à la structure nouvelle du support de l'age de la charrue. Elle vise, dans un premier mode de réalisation, plus particulièrement les dispositifs de réglage pour charrues réversibles qui équipent des tracteurs sur lesquels il est nécessaire de modifier fréquemment les réglages de déport et de dévers.

Selon l'invention le dispositif de réglage de l'age par rapport à son support constitué de deux caissons séparés par une entretoise, comporte un premier axe principal solidaire de l'age et mobile transversalement à l'extrémité du support, un second axe dispose latéralement sur l'entretoise du support situé du côte de la tête d'attelage, à l'opposé de l'extrémité de l'age par rapport à l'axe longitudinal de retournement; le second axe est relié à l'age au moyen d'une bielle réglable sensiblement parallèle audit axe longitudinal, par l'intermédiaire d'un bras solidaire de l'age et disposé entre l'axe principal et l'extrémité de l'age du côté de la tête.

Selon une variante, le pivotement de l'age est assuré par un vérin disposé entre l'extrémité de l'age, côté tête d'attelage, et un axe solidaire de l'entretoise. Ce vérin disposé entre les deux caissons, permet pour une charrue réversible avant ou arrière, un recentrage de l'age selon l'axe longitudinal de retournement de la charrue.

Un autre objet de l'invention est de permettre l'adaptation de la tête circulaire à différents types d'attelage de tracteur. Un dispositif adaptateur permet d'écarter les points d'ancrage de la tête tout en les maintenant le plus près possible des lieux d'application des efforts venant de l'age. L'adaptateur est constitué de deux flasques fixes à la tête par tout moyen approprié; ces flasques supportent les points d'ancrage adaptés à un système d'attelage trois points d'un tracteur.

L'invention sera mieux comprise à l'aide de la description et des dessins annexés donnes à titre indicatif, dans lesquels:

- la figure 1 est une vue schématisée d'un dispositif de liaison selon l'invention;

- la figure 2 est une coupe partielle d'un dispositif de liaison, montrant deux modes d'ancrage de la tête sur le système d'attelage du tracteur;

- la figure 3 représente un mode de réalisation préférentiel du dispositif de liaison selon l'invention;

- la figure 4 montre une barre d'attelage automatique utilisable avec une tête d'attelage selon l'invention;

- la figure 5 est une vue de face de la tête d'attelage;

- la figure 6 est une coupe verticale longitudinale du dispositif de liaison;

- la figure 7 est une vue éclatée d'un dispositif de liaison selon un deuxième mode de réalisation de l'invention;

- la figure 8 est une vue de dessus d'un ensemble charrue tirée et charrue poussée equipée chacune d'un dispositif de liaison selon l'invention;

- la figure 9 est une vue schématisée du dispositif de réglage de l'age, avec le caisson supérieur du support de l'age enlevé;

- la figure 10 est une vue en coupe selon AA du dispositif de translation de l'age;

- la figure 11 est une vue en coupe selon BB du même dispositif de translation de l'age;

- la figure 12 est une vue en coupe selon BB d'un second mode de réalisation du dispositif de translation de l'age;

- la figure 13 représente un mode de réalisation d'un dispositif permettant le pivotement de l'age autour de son axe principal de liaison avec le support;

- la figure 14 représente un dispositif d'adaptation de la tête circulaire à différents types d'attelage de tracteur.

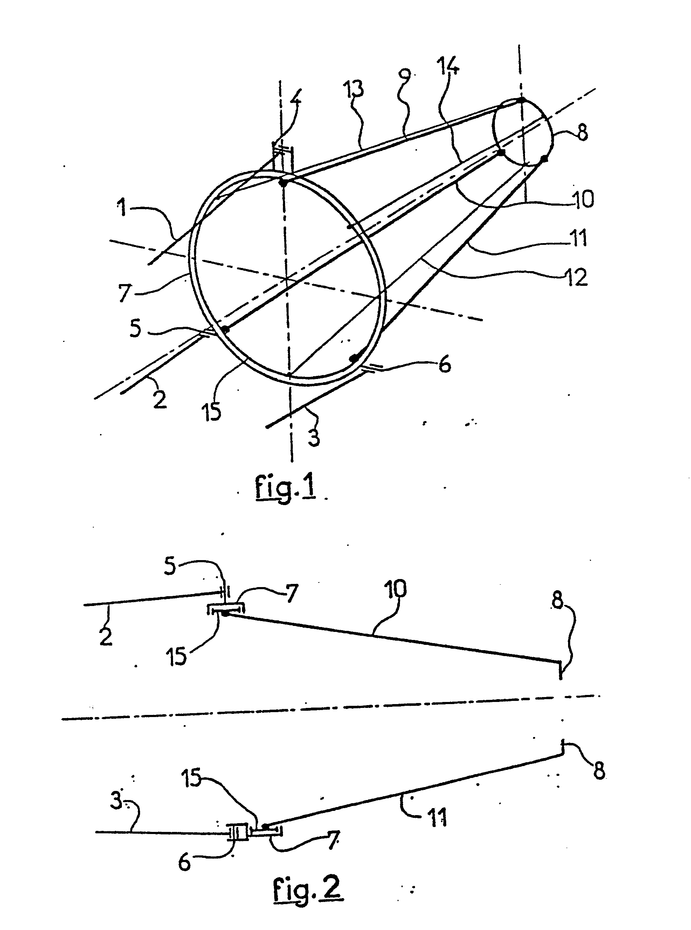

Le dispositif de liaison représente figure 1 est relié au tracteur par un système d'attelage classique trois points, dont les barres 1, 2, 3 reçoivent les organes d'ancrage 4, 5, 6 de la tête 7. Les organes d'ancrage 4, 5, 6 sont, dans le cas de la figure de simples axes et ils sont disposés sur une circonférence qui constitue la tête d'attelage 7 dont le diamètre varie en fonction de la longueur et du poids de la charrue. Un organe 8 solidaire de l'age, non représenté, transmet, dans une première configuration active de la charrue, les efforts venant de l'age vers la tête d'attelage 7, au moyen des bras 9, 10 et 11. Ces bras 9, 10 et 11 constituent le support de l'age et ils arrivent, disposés sur une circonférence 15, au droit des axes d'ancrage 4, 5, 6. Lorsque l'age pivote de 180° au cours de la manoeuvre de retournement pour se placer dans une deuxième configuration active de la charrue, ce sont les bras 12, 13, 14 disposés sur la même circonférence 15, qui assurent la liaison directe entre l'organe 8 solidaire de l'age et les ancrages 4, 5, 6 de la tête d'attelage 7 en se trouvant au droit de ces derniers. La tête d'attelage 7 comporte un chemin de roulement de grand diamètre, dans lequel sont disposés des organes de guidage et de roulement qui assurent la liaison en rotation autour de l'axe longitudinal de retournement, entre la tête et le support de l'age. Sur la figure 2, le dispositif est représenté en coupe schématisée selon deux possibilités de montage. Une première possibilité consiste à disposer l'ancrage 5 sur le contour extérieur de la tête d'attelage 7. La seconde possibilité consiste à disposer l'axe d'ancrage 6 en façade de la tête d'attelage 7 pour former une liaison directe entre l'age solidaire de l'organe 8 et la barre 3 du système d'attelage du tracteur. Par cette dernière disposition, on annule les moments qui s'exercent sur la tête d'attelage 7.

Le support de l'age constitué des bras 10 et 11 pivote dans la tête 7. Cette tête 7 a une section en U dans léquel est disposée la circonférence 15 sur laquelle sont réunis les bras 8 a 14.

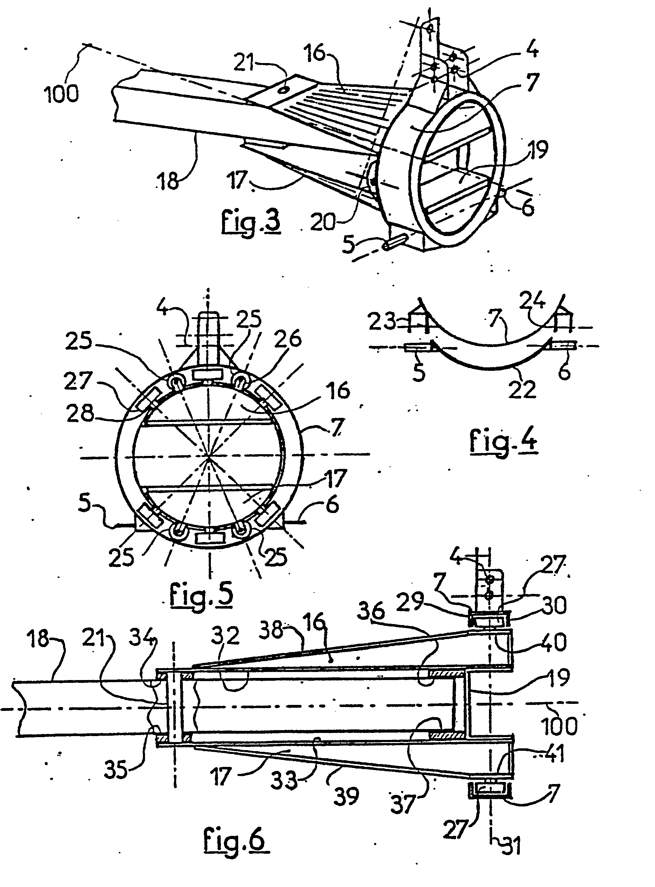

La figure 3 représente un mode de réalisation du dispositif de liaison selon l'invention. Il est constitué d'une tête d'attelage circulaire 7 munie de trois points d'ancrage 4, 5, 6. A l'intérieur de la tête 7 sont disposées les extrémités de deux caissons 16 et 17 qui s'étendent sur l'arrière ou l'avant de la tête selon qu'il s'agit d'un dispositif de liaison pour charrue arrière ou charrue avant. Ces deux caissons 16 et 17 en forme de portions longitudinales de tronc de cône, constituent le support de l'age 18; ils regroupent respectivement les bras 13, 9, 14 et 11, 12, 10, du dispositif de liaison schématisé figure 1 dont l'enveloppe est en forme de tronc de cône également. Une entretoise 19 maintient les deux caissons espacés de part et d'autre de l'axe longitudinal de retournement 100 formant ainsi deux plans parallèles entre lesquels vient s'encastrer l'age 18. Une patte 20 de cette entretoise déborde du contour extérieur des caissons pour servir d'une part, de butée de calage angulaire du support de l'age par rapport à la tête et d'autre part, d'ancrage à une extrémité d'un vérin qui assure la commande de retournement, l'autre extrémité du vérin étant solidaire de la tête 7. L'age 18 est en forme de poutre de section carrée; il est solidaire et pincé entre les caissons 16 et 17 par tous moyens appropriés. Pour pouvoir recevoir plusieurs corps de charrues, l'age 18 n'est pas centré sur l'axe de retournement mais il fait un angle plus ou moins prononcé selon l'espacement entre les corps, comme pour un age de charrue classique. L'age 18 peut être rendu solidaire des caissons au moyen d'une part, d'un axe 21, centré sur l'axe de retournement, et d'autre part, d'une immobilisation angulaire au niveau de la tête 7; cette disposition permet de reporter les efforts principaux de labourage au niveau de l'axe 21, c'est-à-dire loin de la tête.

La figure 4 représente une barre d'attelage automatique 22 destinée à être fixée sur la tête d'attelage 7 par deux chapes ouvertes 23, 24 disposées à la partie inférieure et de part et d'autre de la tête 7. Cette barre d'attelage 22 comporte une partie centrale en arc de cercle venant épouser la partie inférieure de la tête et comporte deux axes 5 et 6 à chaque extrémité, solidaires des extrémités rotuliennes du système d'attelage du tracteur.

La figure 5 montre plus particulièrement les éléments de guidage disposés dans la tête d'attelage 7. Les extrémités des caissons 16 et 17, situées dans la tête 7, comportent des éléments de guidage en rotation dans le contour interieur de cette tête. Les éléments de guidage sont pour une part avec un axe de rotation parallèle à l'axe longitudinal de retournement, pour une autre part avec un axe perpendiculaire audit axe et qui passe par les points d'ancrage 4, 5, 6 des extrémités rotuliennes du système d'attelage du tracteur. Les éléments de guidage 25 à axe parallèle à l'axe longitudinal de retournement sont montés dans une chape 26 sur l'extrémité des caissons 16 et 17; ces éléments de guidage 25 roulent dans la tête d'attelage 7. Les éléments de guidage 27 à axe perpendiculaire à l'axe de retournement sont disposés sur des pivots 28; ils sont en contact alternativement, figure 6, avec les parois latérales 29 et 30 de la tête d'attelage 7. Ces éléments de guidage 27 sont au nombre de six et correspondent par trois, aux trois points d'ancrage 4, 5, 6 de la tête d'attelage, dans chaque position de l'age; les axes de rotation respectifs passent sensiblement par les ancrages 4, 5, 6 sur la tête 7, ils sont situés dans un même plan 31 perpendiculaire a l'axe de retournement de la charrue. Le processus de montage du dispositif de liaison consiste à introduire tout à tour les caissons 16 et 17 dans la tête 7 en positionnant les éléments de guidage dans le chemin de roulement, puis à les écarter et les positionner au moyen de l'entretoise 19. Les pivots 28 extrêmes de chaque caisson, et les éléments de guidage 27 respectifs peuvent être montés après la mise en place des caissons. Les éléments de guidage 25 et 27 sont de préférence des roulements à billes.

La figure 6 montre la tête d'attelage 7 où l'on voit apparaître comme montré précédemment, les ailes latérales 29 et 30 qui procurent un chemin de roulement à section en U; la partie centrale en U formant une portion de cylindre, les deux ailes 29 et 30 sont orientées vers l'interieur de la tête. Dans ce chemin de roulement sont guidés les éléments de guidage 25 et 27 du support de l'age 18 constitué des deux caissons 16 et 17. Ces deux caissons s'étendent de la tête 7 jusqu'à l'axe vertical 21 solidaire de l'age 18. La longueur du support pourra varier selon le type de charrue, elle sera comprise entre une à trois fois le diamètre interne de la tête d'attelage 7. Les caissons assurent l'encastrement de l'age entre deux plans formant deux surfaces parallèles 32 et 33 disposées de part et d'autre de l'axe 100. Les surfaces.d'appui 34 et 35 plus réduites peuvent être disposées de part et d'autre de l'axe de retournement 100 et autour de l'axe 21, constituant des points d'appui pour l'encastrement, deux autres surfaces d'appui 36 et 37 disposées au niveau de la tête constituent les seconds appuis de l'encastrement de l'age 18. L'age 18 est immobilisé angulairement par tout moyen approprié; il peut aussi pivoter sous l'effet de moyens détaillés ci-après. Des portions longitudinales de tronc de cône 38 et 39 renforcent les surfaces planes 32 et 33 des caissons, elles assurent la liaison entre les portions cylindriques 40 et 41 qui supportent les éléments de guidage 25 et 27 et les extrémités des surfaces planes 32 et 33 du côté de l'axe 21.

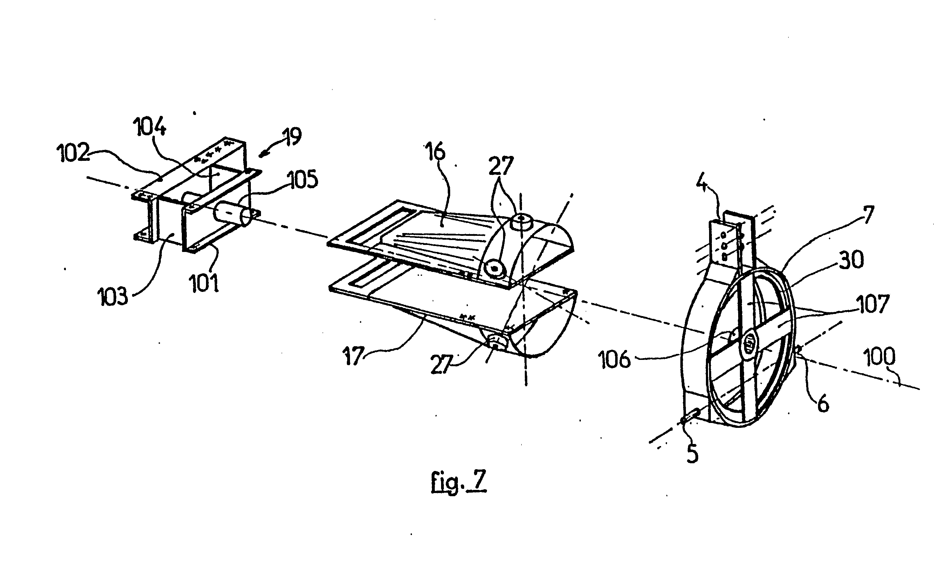

La figure 7 représente, en vue éclatée, un deuxième mode de réalisation d'un dispositif de liaison age-tracteur selon l'invention. La tête circulaire 7 comporte des structures d'ancrage 4, 5, 6 qui coopèrent avec un système classique d'attelage de tracteur, non représenté du type trois points.

La tête 7 comporte un chemin de roulement à section en U orienté vers l'intérieur, pour recevoir les organes de guidage 27 disposés sur les portions cylindriques des caissons 16 et 17. Ces organes de guidage 27 sont de préférence des roulements, montés sur des pivots; ils sont centrés, chacun sur un axe perpendiculaire à l'axe longitudinal 100 de la tête 7. Ces roulements 27 transmettent les efforts venant de l'age, non represénté, à la tête circulaire 7, sensiblement au niveau des structures d'ancrage 4, 5 et 6.

Les caissons 16 et 17 sont maintenus écartés dans la tête 7 au moyen de l'entretoise 19 constituée de deux poutres 101 et 102 à section en U assemblées dos à dos par des platines 103 et 104 d'écartement. Les caissons 16 et 17 sont boulonnés sur les flancs des poutres 101 et 102, après leur mise en place dans la tête 7. Le centrage des caissons 16 et 17 dans la tête 7 est réalisé au moyen d'une structure de centrage solidaire de la tête 7 et d'un organe de centrage 105 solidaire de l'entretoise 19. La structure de centrage sur la tête 7 est constituée d'un moyeu 106 centré sur l'axe 100 de la tête 7, et de plusieurs bras 107. Ces bras 107 supportent le moyeu 106 et ils sont fixés sur la tête 7, soudés par exemple sur le flanc 30 du chemin de roulement de ladite tête. De préférence, le moyeu 106 est solidaire de trois ou quatre bras 107. Dans le cas de trois bras 107, ceux-ci sont soudés au droit des structures d'ancrage 4, 5 et 6; dans le cas de quatre bras, ils sont disposés en croix verticalement et horizontalement. L'organe de centrage 105, de l'entretoise 19 est un arbre solidaire des poutres 101 et 102. Il traverse le moyeu 106 de la structure de centrage de la tête 7. L'arbre 105 et le moyeu 106 n'assurent que le centrage des caissons 16 et 17 dans la tête 7. La liaison arbre-moyeu peut être realisée par l'intermédiaire d'une rotule qui absorberait plus facilement les mouvements de l'arbre par rapport à la tête. Dans le cas d'un palier lisse, ce sont les bras 107 qui doivent être suffisamment élastiques pour permettre au moyeu 106 de suivre les mouvements éventuels de l'arbre 105.

Un perfectionnement complémentaire peut être apporté aux éléments de guidage 27. Ce perferctionnement consiste à disposer les éléments 27 qui sont des roulements sur des boggies articulés sur les pivots 28. Le boggie présente le double avantage de suivre plus facilement les légères déformations du chemin de roulement et de diminuer la charge des roulements 27 qui sont plus nombreux. Les éléments de guidage 27 que ce soient de simples roulements ou des boggies avec deux roulements, peuvent être situés uniquement au droit des points d'ancrage 5 et 6 disposes de part et d'autre, à la partie inférieure de la tête d'attelage; ils sont alors disposés de façon à recevoir les efforts principaux dans la mesure ou les efforts transmis par le troisième point d'ancrage, situé à la partie supérieure de la tête, sont moins importants ce qui est le cas d'une charrue semi-portée.

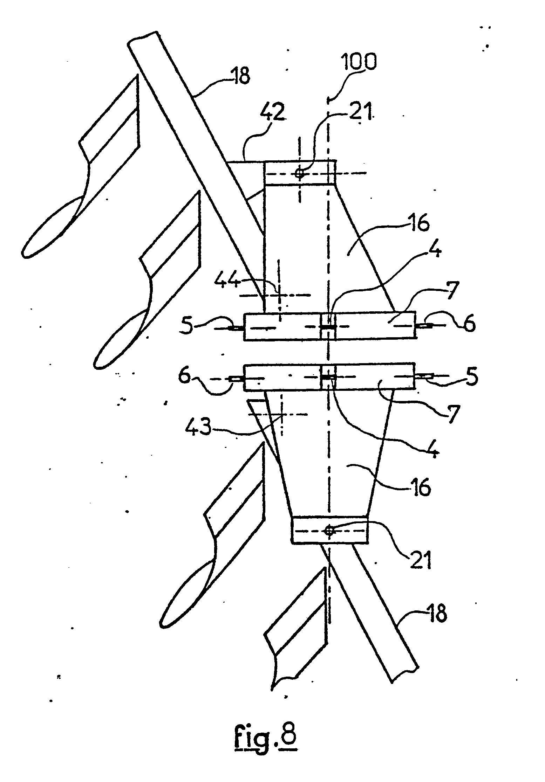

La figure 8 répresente un ensemble pour labour, sans le tracteur, constitué d'une charrue reversible tirée, disposée à l'arrière d'un tracteur et d'une charrue réversible poussée, disposée à l'avant d'un tracteur. Les dispositifs de liaison comportent les têtes d'attelage 7 et les caissons 16 et 17 qui apparaissent en vue de dessus. Le caisson 16 de la charrue tirée est disposé vers l'arrière, selon l'axe longitudinal de retournement: il comporte à son extrémité arrière, l'axe principal vertical 21 de traction qui traverse l'age 18. La partie avant de l'age 18 est directement encastrée entre les caissons et bloquée pour maintenir le calage angulaire de l'age.

La particularité de la charrue avant réversible qui nécessite un déport de l'ensemble des socs au-delà du plan passant par l'intérieur des roues avant et arrière côté déport du tracteur, est résolue dans le dispositif de liaison selon l'invention par une poutre 42, solidaire de l'age, qui vient s'encastrer entre les deux caissons du support; l'extrémité arrière de l'age est également encastrée entre les deux caissons au niveau de la tête d'attelage 7 pour diminuer la portée de la poutre 42, les caissons de la charrue poussée sont déportés latéralement par rapport à l'axe 100 vers l'age 18.

Que ce soit dans le cas de la charrue poussée ou dans le cas de la charrue tirée, le calage angulaire de l'age 18 peut être effectué par tous moyens comme par exemple des axes 43 et 44 qui traversent l'age et les caissons 16 et 17 au niveau de la tête 7. D'autres moyens sont decrits ci-après qui permettent un reglage du positionnement de l'age mais aussi un pivotement de l'age.

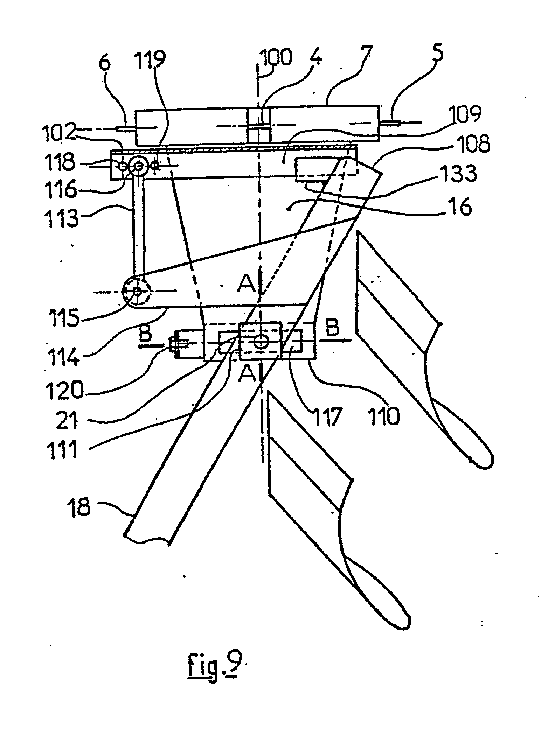

La figure 9 répresente un dispositif de liaison entre l'age 18 et un tracteur dont le système d'attelage est solidaire des points d'ancrage 4, 5 et 6; le caisson de dessus est enlevé. Le dispositif de liaison comporte une tête d'attelage circulaire 7 dans laquelle pivote, selon l'axe longitudinal de retournement 100 le support de l'age 18, composé de deux caissons 16 et 17 disposés de part et d'autre dudit axe et espacés, du côté de la tête 7 par la partie 102 de l'entretoise 19. L'age 18 est encastré dans l'espace libre entre les deux caissons 16 et 17; il est encastré d'une part à son extrémité 108 entre les deux ailes 109 de l'entretoise et, d'autre part, au niveau de l'extrémité 110 des caissons par l'intermédiaire de deux plaques d'appui 111 disposées autour de l'axe principal 21. L'axe principal 21 assure la liaison entre l'age et les caissons 16 et 17 avec la possibilité de se déplacer transversalement par rapport à l'axe longitudinal 100 pour permettre le réglage de déport de l'age. L'age 18 est maintenu angulairement par une bielle 113 solidaire de l'entretoise; la bielle 113 est solidaire de l'age 18 par un bras 114, disposé entre les caissons 16 et 17, qui traverse l'axe longitudinal 100. La bielle 113, articulée par un axe 115 sur le bras 114 en forme de chape, et par un axe 116 sur l'entretoise, est disposée sensiblement parallèle à l'axe longitudinal 100 à l'opposé de l'extrémité 108 de l'age, par rapport à l'axe 100. Le déplacement de l'axe principal 21 dans la gorge 117 provoque un déplacement de l'axe 115 du bras selon un arc de cercle centré sur l'axe 116 de l'entretoise. Ce déplacement de l'axe 115 selon un arc de cercle et non une droite parallèle au déplacement de l'axe 21 induit une modification du dévers de l'age qu'il est possible de régler en choisissant un autre axe 118 ou 119 sur la partie 102 de l'entretoise 19.

Le réglage du déport s'effectue par la simple manoeuvre de la tête de vis 120 disposée latéralement à l'extrémité 110 des caissons et le réglage du dévers s'effectue donc, par modification de l'ancrage de la bielle 113 sur l'entretoise au moyen des divers trous de positionnement 116, 118, 119.

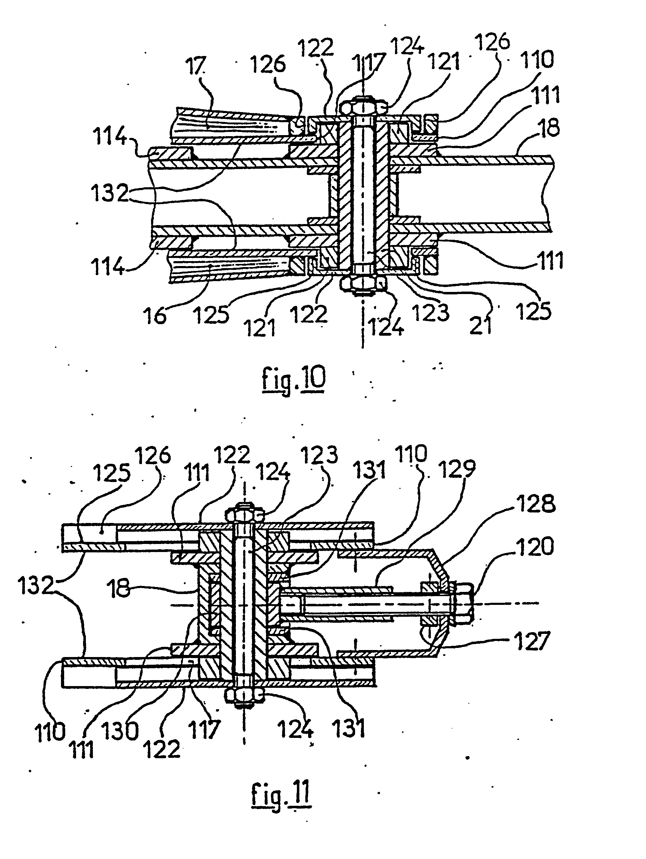

La figure 10 detaille le dispositif de déplacement transversal de l'axe principal 21 solidaire de l'age 18, dans les gorges 117 situées à l'extrémité 110 des caissons 16 et 17. L'age 18 est disposé entre les deux caissons 16 et 17 et repose sur ces derniers par l'intermédiaire des plaques d'appui 111. Ces plaques d'appui sont traversées par l'axe principal 21 qui déborde de part et d'autre pour recevoir les carrés de guidage 121 disposés dans la gorge 117 des caissons 16 et 17. Des chapeaux 122 enserrent l'axe principal 21 et maintiennent les carrés de guidage 121 en position dans les gorges 117 au moyen d'un goujon 123 et des écrous 124. Ces chapeaux 122 ont également pour but de maintenir les extrémités des deux caissons 16 et 17 afin d'éviter qu'ils s'écartent; ils complètent le guidage transversal en coopérant avec les surfaces planes horizontales parallèles 125 de l'extrémité 110 de chaque caisson et les flancs 126 perpendiculaires a ces surfaces planes. Les chapeaux 122 couvrent la quasi totalité des extrémités 110 des caissons 16 et 17; ils forment avec l'axe 21 un ensemble rigide en forme de H renversé.

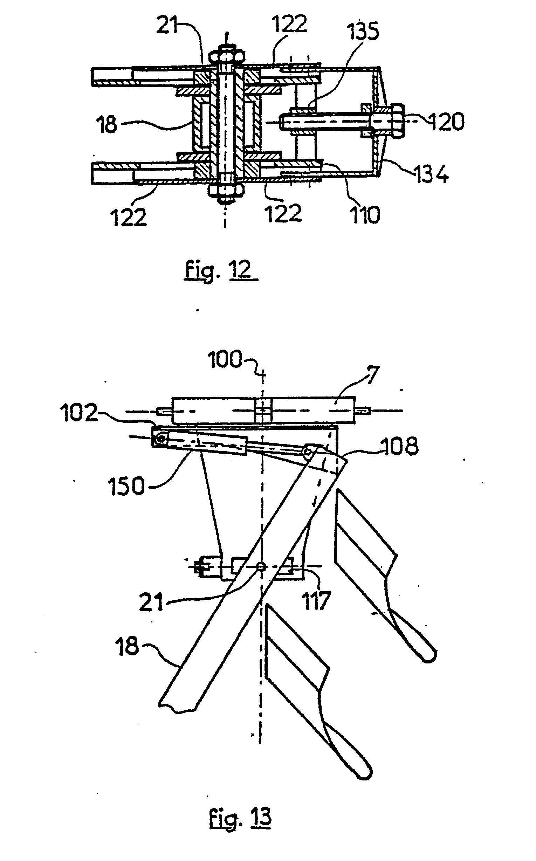

La figure 11 présente une coupe selon BB dans laquelle on distingue le dispositif de commande de translation de l'age 18 au moyen de la tête de vis 120. La vis 120 immobilisée en translation par une bague 127, tourne dans un pont 128 en forme de U relié transversalement, par boulons, aux extrémités 110 des deux caissons du support. La rotation de la vis 120 par sa tête déplace le manchon fileté 129 solidaire de la douille 130 centrée sur l'axe principal 21. La douille 130 est disposée dans l'age 18 qui comporte les renforts longitudinaux 131. Le déplacement du fourreau entraîne le déplacement des chapeaux 122 également qui coulissent sur les surfaces planes d'extrémités 125 entre les flancs 126. Un certain jeu peut être maintenu entre les chapeaux 122, les plaques d'appui 111 d'une part et les surfaces planes 125 et 132 de l'extrémité des caissons 16 et 17. Cette disposition permet un déplacement latéral de l'age par simple action sur la vis de manoeuvre 120. On pourra cependant supprimer ce jeu et assurer, au moyen du goujon 123 un pincement des extrémités du caisson sur les plaques d'appui 111 par les chapeaux 122 pour rigidifier l'ensemble. Les écrous 124 et la vis 120 auront de préférence les mêmes dimensions pour être manoeuvres avec la même clé. Au lieu de traverser l'age 18, l'axe principal 21 peut être situé en déport dans une chape solidaire de l'age et dont les flancs servent de surfaces d'appui sur les extrémités des caissons du support. .

Pour améliorer l'encastrement de l'age dans le support, le bras 114 solidaire de l'age, disposé entre les deux caissons 16 et 17, est en contact glissant avec les surfaces planes parallèles 132 des deux caissons 16 et 17 représenté figure 2; le bras est composé de deux plaques 114 soudées de part et d'autre de l'age 18. L'encastrement de l'age 18 peut être complété à son extrémité 108 en disposant une poutre 133 qui augmente les surfaces d'appui en contact avec les deux ailes 109 de la partie 102 de l'entretoise 19.

La figure 12 represente une variante du dispositif de réglage du déport de l'age 18 qui présente l'avantage de ne pas modifier la poutre qui constitue l'age 18.

Le dispositif de manoeuvre de l'age 18 est constitué d'une vis 120 immobilisée en translation dans un pont 134 solidaire des chapeaux 122. Le manchon fileté 135 de la vis 120 est solidaire de l'extrémité 110 des caissons 16 et 17. La vis 120 entraîne ensemble le pont 134, les chapeaux 122 et par la l'axe 21 solidaire de l'age 18.

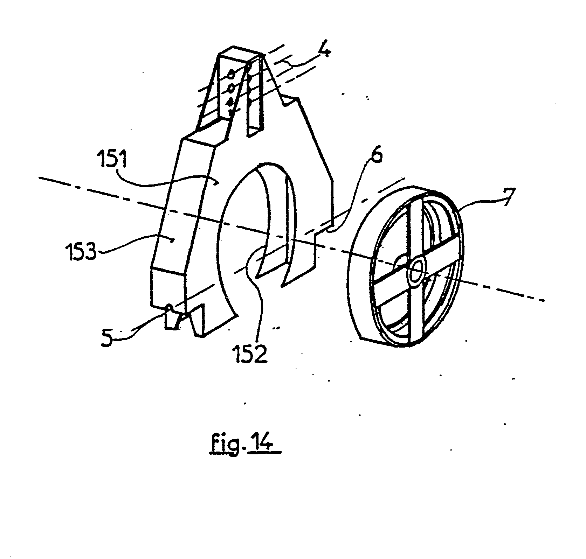

La figure 13 représente un autre mode de réalisation permettant de faire varier le positionnement de l'age 18, et plus particulièrement de le faire varier dans le but de provoquer un recentrage de l'age 18 par rapport à l'axe longitudinal de retournement 100 réduisant ainsi les efforts de retournement. Ce même dispositif peut servir également à recentrer l'age 18 afin de diminuer l'encombrement de la charrue lors de son transport.

Ainsi dans l'exemple de réalisation de la figure 13, l'age 18 est monté pivotant autour de l'axe principal 21, lequel axe peut se déplacer transversalement dans la gorge 117 au moyen du dispositif décrit précédemment en relation avec les figures 10, 11 et 12. L'age 18 est mobile sous l'effet d'un vérin 150 dont une extrémité est fixée sur l'age 18 et l'autre est fixée sur la partie 102 de l'entretoise. La partie extrême 108 de l'age, du côté de la tête d'attelage est de préférence encastrée et guidée par les flancs de l'entretoise. L'entretoise peut aussi comporter d'une part une butée réglable de calage angulaire de l'age en position de travail afin de soulager le vérin 150 et, d'autre part, des moyens de réglage de positionnement dudit vérin.

Dans le cas d'un dispositif de liaison pour charrue poussée, comme représente figure 8, on utilise le même dispositif de basculement de l'age 18, c'est-à-dire un vérin disposé entre les caissons au niveau de la tête d'attelage 7. Toutefois, on peut prévoir, toujours dans le cas de la charrue poussée, compte-tenu du déport latéral important, d'effectuer un recentrage de l'age 18 par un pivotement autour de l'axe 44 situé au niveau de la tête 7, entre les caissons; le dispositif de recentrage étant un vérin disposé entre les caissons 16 et 17. Dans ce cas, la poutre 42 est encastrée à l'extrémité des caissons 16 et 17 et coulisse entre ces extrémités.

La figure 14 représente un dispositif permettant d'adapter la tête circulaire donnée à plusieurs types d'attelage. Ce dispositif adaptateur enserre la tête circulaire 7 et il comporte les points d'ancrage correspondants a un type d'attelage donne. Cet adaptateur est constitué essentiellement de deux flasques 151 et 152 soudés de chaque côté de la tête sur au moins les deux tiers de sa circonférence. Ces flasques sont sensiblement en forme de trapèze et comportent des bandes de renforcement latérales 153. La partie supérieure des flasques comporte la structure d'ancrage 4 du troisième point d'un attelage classique de tracteur. De chaque côté, à la base des flasques se situent les deux autres structures d'ancrage 5 et 6, dans le prolongement des bandes latérales de renforcement 153.

**Revendications**

1.- Dispositif de liaison entre le système d'attelage d'un tracteur et l'age (18) d'une charrue réversible portée ou semi-portée, du type comprenant une tête d'attelage (7) solidaire du système d'attelage trois points du tracteur et un support solidaire de l'age la tête d'attelage (7) comporte des moyens d'ancrage sur les extrémités rotuliennes des barres (1, 3) du système d'attelage du tracteur et elle comporte intérieurement un chemin de roulement de grand diamètre, dans lequel sont disposés des organes de guidage et de roulement (25, 27) assurant une liaison en rotation autour de l'axe longitudinal de retournement (100), entre la tête (7) et le support solidaire de l'age, certains de ces organes de guidage et de roulement (25, 27) étant disposés sensiblement en face des moyens d'ancrage (4, 5, 6) de la tête (7) sur le système d'attelage du tracteur dans chaque configuration de travail de la charrue, caractérisé en ce que le support solidaire de l'age se compose d'un ensemble de bras dont la longueur est de l'ordre de deux fois le diamètre du chemin de roulement de la tête (7) et dont l'enveloppe forme un tronc de cône centre sur l'axe longitudinal de retournement (100), et en ce qu'à chaque position de travail de la charrue, un bras (9-14) est situe en face de chaque moyen d'ancrage (4, 5, 6) de la tête (7) sur le système d'attelage, sur ce bras étant montés lesdits certains organes de guidage et de roulement (25, 27).

2.- Dispositif de liaison entre le système d'attelage d'un tracteur et l'age d'une charrue reversible portée ou semi-portée selon la revendication 1, caractérisé en ce que les bras supportant l'age sont en forme de deux caissons (16) et (17) espacés par une entretoise (19) au niveau de la tête (7) et munis de moyens pour maintenir et guider l'age(18) encastré entre lesdits caissons (16) et (17), chaque caisson comporte une portion cylindrique (40, 41) disposée dans la tête (7) face au chemin de roulement.

3.- Dispositif de liaison entre le système d'attelage d'un tracteur et l'age d'une charrue réversible portée ou semi-portée selon la revendication 2, caractérisé en ce que les organes assurant une liaison entre le chemin de roulement à section en U de la tête (7) et le support de l'age (18) sont constitués d'une part d'éléments de guidage (25) en contact avec le fond du U, du type roulement à billes, monté dans des chapes (26) solidaires des portions cylindriques (40, 41) des caissons (16) et (17) et, d'autre part, d'éléments de guidage (27), en contact avec les flancs du U, du type roulement à billes, montés sur des pivots (28) solidaires des portions cylindriques (40, 41) des caissons (16) et (17).

4.- Dispositif de liaison entre le système d'attelage d'un tracteur et l'age d'une charrue réversible portée ou semi-portée selon la revendication 2, caractérisé en ce que les organes assurant une liaison entre le chemin de roulement à section en U de la tête (7) et le support de l'age sont constitués d'une part, d'éléments de guidage (27), en contact avec les flancs du U, du type roulement à billes, montés sur des pivots (28) solidaires des portions cylindriques (40, 41) des caissons (16) et (17) et, d'autre part, d'un moyeu (106) supporté par une structure de centrage constituée de bras (107), solidaires de la tête (7) coopérant avec un arbre de centrage (15) solidaire de l'entretoise (19), libre en translation dans le moyeu (106).

5.- Dispositif de liaison entre le système d'attelage d'un tracteur et l'age d'une charrue réversible portée ou semi-portée, selon l'une des revendications 3 ou 4, caractérisé en ce que les éléments de guidage (27) sont constitués de boggies montés sur les pivots (28), les boggies étant munis de roulements du type à billes.

6.- Dispositif de liaison entre le système d'attelage d'un tracteur et l'age d'une charrue réversible portée ou semi-portée, selon l'une des revendications 1 à 5, caractérisé en ce que les organes d'ancrage (4, 5, 6) de la tête (7) sont disposés directement sur le contour du chemin de roulement.

7.- Dispositif de liaison entre le système d'attelage d'un tracteur et l'age d'une charrue réversible portée ou semi-portée, selon l'une des revendications 1 à 5, caractérisé en ce que les organes d'ancrage (4 5, 6) de la tête sont disposés sur un dispositif adaptateur enserrant le chemin de roulement, constitué de deux flasques (151) et (152) soudés de chaque côté du chemin de roulement et des bandes latérales (153) de renforcement disposées entre lesdits flasques et lesdits organes d'ancrage.

8.- Dispositif de liaison entre le système d'attelage d'un tracteur et l'age d'une charrue réversible portée ou semi-portée, selon l'une des revendications 2 à 7, caractérisé en ce que l'age (18) est maintenu et guidé entre les deux caissons (16) et (17) d'une part, par des moyens disposés au niveau de la tête (7) agissant sur l'extrémité de l'age (18) et, d'autre part, par des moyens disposés à l'extrémité des caissons (16) et (17) agissant sur un axe principal (21) solidaire de l'age (18).

9.- Dispositif de liaison entre le système d'attelage d'un tracteur et l'age d'une charrue réversible portée ou semi-portée selon la revendication 8, caractérisé en ce que les moyens disposés à l'extrémité des caissons (16) et (17) sont constitués d'un dispositif de déplacement transversal de l'age (18) dans une gorge (117) à l'extrémité des caissons, par l'intermédiaire d'un système vis-écrou agissant sur des chapeaux (122) solidaires de l'axe principal (21).

10.- Dispositif de liaison entre le système d'attelage d'un tracteur et l'age d'une charrue réversible portée ou semi-portée, selon l'une des revendications 8 ou 9, caractérisé en ce que les moyens disposés au niveau de la tête (7) sont constitués d'un vérin (150) disposé entre la partie (102) de l'entretoise (19) et l'extrémité (108) de l'age.

11.- Dispositif de liaison entre le système d'attelage d'un tracteur et l'age d'une charrue réversible portée ou semi-portée selon l'une des revendications 8 ou 9, caractérisé en ce que les moyens disposés au niveau de la tête (7) sont constitués d'une bielle (13) disposée sensiblement parallèle à l'axe longitudinal (100) de retournement entre la partie (102) de l'entretoise (19) et un bras (14) solidaire de l'age (18), la bielle (13) se situant a l'oppose de l'extrémité (108) de l'age par rapport audit axe (100).

12.- Dispositif de liaison entre le système d'attelage d'un tracteur et l'age d'une charrue réversible portée ou semi-portée, selon l'une des revendications 1 a 11, caractérisé en ce que la tête (7) est solidaire du système d'attelage du tracteur au moyen d'une barre d'attelage (22) comportant une partie centrale en arc de cercle qui épouse le contour inférieur de la tête (7).

13.- Ensemble pour labour constitué d'une charrue réversible disposée à l'avant du tracteur et d'une charrue réversible disposée à l'arrière du tracteur, caractérisé en ce que les dispositifs de liaison à l'avant et à l'arrière entre les systèmes d'attelage et les ages avant et arrière sont selon l'une des revendications 1 à 12.

14.- Ensemble pour labour selon la revendication 13, caractérisé en ce que le dispositif de liaison de la charrue avant est constitué de caissons déportés latéralement par rapport à l'axe longitudinal de retournement (100), recevant un age muni d'une poutre latérale (42) encastrée entre les extrémités des caissons et portant l'axe principal (21).

15.- Procédé de montage d'un dispositif de liaison entre le système d'attelage d'un tracteur et l'age d'une charrue réversible portée ou semi-portée, du type selon l'une des revendications 2 à 14, caractérisé en ce qu'il consiste à introduire tour à tour les caissons (16) et (17) dans la tête d'attelage (7) en positionnant les éléments de guidage dans le chemin de roulement, puis à écarter lesdits caissons et à les positionner au moyen de l'entretoise (19).


**Patentansprüche**

1. Verbindung zwischen der Anhängervorrichtung eines Traktors und dem Grendel (18) eines reversiblen gestützten oder halbgestützten Pflugs der Bauart mit einem Anhängerkopf (7), der mit einer Drei-Punkt-Anhängervorrichtung des Traktors fest verbunden ist, sowie mit einer Stütze, die mit dem Grendel fest verbunden ist, wobei der Anhängerkopf (7) Verankerungselemente an den Gelenkscheibenenden der Stangen (1, 3) der Anhängervorrichtung des Traktors aufweist und im Inneren einen Rollweg großen Durchmessers aufweist, in dem Führungs- und Rollorgane angeordnet sind, die eine Drehverbindung um die Umdrehlängsachse (100) gewährleisten, wobei einige der Führungs- und Rollorgane zwischen dem Kopf (7) und der mit dem Grendel verbundenen Stütze ungefähr gegenüber Verankerungselementen (4, 5, 6) des Kopfes (7) auf der Anhänger Vorrichtung des Traktors in jeder Arbeitsstellung des Pflugs angeordnet sind dadurch gekennzeichnet, daß die mit dem Grendel (18) fest verbundene Stütze aus einer Gruppe von Armen besteht, deren Länge in der Größenordnung des zweifachen Durchmessers des Rollwegs des Kopies (7) liegt und deren Umhüllende einen Kegelstumpf bildet, der auf der Umdrehlängsachse (100) zentriert ist, und daß in jeder Arbeitsstellung des Pflugs ein Arm (9-14) gegenüber jedem Verankerungselement (4, 5, 6) des Kopfes (7) auf der Anhängervorrichtung angeordnet ist, auf welchem Arm die genannten Führungsund Rollorgane (25, 27) angebracht sind,

2. Verbindung zwischen der Anhängervorrichtung eines Traktors und dem Grendel eines reversiblen gestützten oder halbgestützten Pflugs nach Anspruch 1, dadurch gekennzeichnet daß die Arme, welche den Grendel unterstützen, als zwei Kammern (16 und 17) ausgebildet sind, die durch ein Zwischenstück (l9) in Höhe des Kopfes (7) im Abstand zueinander angeordnet sind, die durch Führungselementen des Grendels (18) versehen sind, welcher Grendel zwischen den Kammer (16 und 17) eingefügt ist, und daß jede Kammer einen zylindrischen Abscnitt (40,41) aufweist, der im Kopf (7) gegenüber dem Rollweg angeordnet ist.

3. Verbindung zwischen der Anhängervorrichtung eines Traktors und dem Grendel eines reversiblen gestützten oder halbgestützten Pflugs nach Anpruch 2 dadurch gekennzeichnet daß die eine Verbindung zwischen dem Rollweg, der als U-förmiger Abschnitt des Kopfes (7) ausgebildet ist, und der Stütze des Grendels (18) gewährleistende Organe einerseits durch Führungselemente (25) gebildet werden, die mit der Grundseite des U in Verbindung stehen und als Kugellager ausgebildet sind, die in Bügeln (26) angebracht sind, welche mit zylindrischen Abschnitten (40, 41) der Kammern (16 und 17) fest verbunden sind, und andererseits durch Führungselemente (27) der Kugellagerbauart gebildet werden, die mit den Flanken des U in Verbindung stehen und als Kugellager ausgebildet sind, welche auf Zapfen (28) angebracht sind, die mit zylindrischen Abschnitten (40, 41) der Kammern (16 und 17) verbunden sind.

4. Verbindung zwischen der Anhängervorrichtung eines Traktors und dem Grendel eines reversiblen gestützten oder halbgestützten Pflugs nach Anspruch 2, dadurch gekennzeichnet, daß die eine Verbindung zwischen dem Rollweg, der als U-förmiger Abschnitt des Kopfes (7) ausgebildet ist, und der Stütze des Grendels gewährleistende Organe einerseits mit Führungselementen (27) gebildet werden, die mit den Flanken des U in Verbindung stehen und als Kugellager ausgebildet sind, welche auf den Zapfen(28) gelagert sind, die mit zylindrischen Abschnitten (40, 41) der Kammern (16 und 17) fest verbunden sind und andererseits durch eine Nabe (106) gebildet werden, welche durch eine aus Armon (107) bestehende Zentriereinrichtung gestützt ist, wobei die Arme mit dem Kopf (7) fest verbunden sind, der mit einer mit dem Zwischenstück (19) fest verbundenen Zentrierwelle (15) zusammenwirkt, welche in der Nabe (106) verschiebbar ist.

5. Verbindung zwischen der Anhängervorrichtung eines Traktors und dem Grendel eines reversiblen gestützten oder halbgestützten Pflugs nach Anspruch 3 oder 4, dadurch gekennzeichnet, daß die Führungselemente (27) durch Drehgestelle gebildet sind, die auf den Zapfen (28) angebracht sind, und daß die Drehgestelle mit Kugellagern versehen sind.

6. Verbindung zwischen der Anhänger Vorrichtung eines oder halbgestützten Pfluge nach einem der Ansprüche I-5,
dadurch gekennzeichnet
daß die Verankerungselemente (4, 5, 6) des Kopfes (7) direkt auf dem Umriß des Rollwegs eingestellt sind.

7. Verbindung zwischen der Anhängervorrichtung eines Traktors und dem Grendel eines reversiblen gestützten oder halbgestützten Pflugs nach einem der Ansprüche 1-5,
dadurch gekennzeichnet,
daß die Verankerungselemente (4, 5, 6) des Kopfes auf einer Anpassungseinrichtung angebracht sind, welche den Rollweg einschließt und die aus zwei Backen (151 und 152), die an jede Seite des Rollwege geschweißt sind, und verstärkenden Querbändern gebildet wird, die zwischen den Backen und den Verankerungsorganen angeordnet sind.

8. Verbindung zwischen der Anhängervorrichtung eines Traktors und dem Grendel eines reversiblen gestützten oder halbgestützten Pflugs nach einem der Ansprüche 2-7,
dadurch gekennzeichnet,
daß der Grendel (18) zwischen den beiden Kammern (16 und 17) einerseits durch in Höhe des Kopfes (7) angeordnete Elemente gehalten und geführt ist, welche auf das Ende des Grendels (18) einwirken und andererseits durch Elemente gehalten und geführt wird, die an dem Ende der Kammern (16 und 17) angeordnet sind und auf eine mit dem Grendel (18) fest verbundene Hauptachse einwirken.

9. Verbindung zwiechen der Anhängervorrichtung eines Traktors und dem Grendel eines reversiblen gestützten oder halbgestützten Pflugs nach Anspruch 8,
dadurch gekennzeichnet,
daß die am Ende der Kammern (16 und 17) angeordneten Elemente durch eine Querverschiebeeinrichtung des Grendels (18) in einer Zuhaltung (I17) am Ende der Kammern mittels einer Schrauben-Muttern-Anordnung gebildet werden, die an Kappen (122) angreifen, welche mit der Hauptachse (21) verbunden sind.

10. Verbindung zwischen der Anhängervorrichtung eines Traktors und dem Grendel eines reversiblen gestützten oder halb gestützten Pflugs nach Anspruch 8 oder 9,
dadurch gekennzeichnet,
daß die in Höhe des Kopfes (7) angeordneten Elemente aus einem Hebebock (150) bestehen, der zwischen dem Abschnitt (102) des Zwischenstücks (19) und dem Ende (108) des Grendels angeordnet ist,

11. Verbindung zwischen der Anhängervorrichtung eines Traktors und dem Grendel eines reversiblen gestützten oder halbgestützten Pflugs nach Anspruch 8 oder 9,
dadurch gekennzeichnet,

daß die in Höhe des Kopfes (7) angeordneten Elemente aus einer Schubstange (13) gebildet werden, die sich im wesentlichen parallel zu der Umdrehlängsachse (100) zwischen dem Teil (102) des Zwischenstücks (19) und einem mit dem Grendel (18) verbundenen Arm gegenüberliegend dem Ende (108) des Grendels bezüglich der Umdrehlängsachse (100) befindet.

12. Verbindung zwischen der Anhängervorrichtung eines Traktors und dem Grendel eines reversiblen gestützten oder halbgestützten Pflugs nach einem der Ansprüche 1-11,
dadurch gekennzeichnet,
daß der Kopf (7) der Anhängervorrichtung des Traktors mittels einer Anhängerstange (22) verbunden ist, die einen kreisbogenförmigen Mittelteil aufweist, welcher an den unteren Umriß des Kopfes (7) angepaßt ist.

13. Arbeitseinrichtung bestehend aus einem reversierbaren Pflug, der vor dem Traktor angeordnet ist, und einem reversierbaren Pflug, der hinter dem Traktor angebracht ist
dadurch gekennzeichnet,
daß die Verbindungevorrichtungen vor und hinter den Anhängervorrichtungen sowie der vordere und der hintere Grendel nach einem der Ansprüche 1-12 ausgebildet sind.

14. Arbeitseinrichtung nach Anspruch 13,
dadurch gekennzeichnet,
daß die Verbindungsvorrichtung des vorderen Pflugs durch Kammern gebildet wird, die zu der Umdrehlängsachse (100) quer versetzt sind und die einen Grendel mit einem Querträger (42) aufnehmen, der zwischen den Enden der Kammern eingepaßt ist und die Hauptachse (21) trägt.

15. Verfahren zur Anbringung einer Verbindungsvorrichtung zwischen der Anhängervorrichtung eines Traktors und dem Grendel eines reversiblen gestützten oder halbgestützten Pflugs der Bauart nach einem der Ansprüche 2-14,
dadurch gekennzeichnet,
daß Zug um Zug die Kammern (18 und 17) in den Anhängerkopf (7) eingeführt werden und die Führungselemente in dem Rollweg positioniert werden, woran anschließend die Kammern gespreizt und mittels des Zwischenstücks (19) positioniert werden.

**Claims**

1. Device for connecting the hitching system of a tractor and the beam (18) of a mounted or semi-mounted reversible plough, of the type comprising a hitching endpiece (7) integral with the three-point hitching system of the tractor and a support integral with the beam; the hitching end-piece (7) has means for performing fixing to the trunnion-type ends of the bars (1, 3) of the tractor hitching system and has internally a roller track with a. large diameter, inside which there are arranged guiding and rollinq members (25, 27) ensuring a rotational connection, about the longitudinal turning axis (100), between the end-piece (7) and the support integral with the beam, some of these guiding and rolling members (25, 27) being arranged substantially opposite means (4, 5, 6) for fixing the endpiece (7) to the tractor hitching system in each working position of the plough, characterized in that the support integral with the beam consists of a set of arms, the length of which is approximately twice the diameter of the roller track of the end-piece (7) and the outer casing of which forms a cone section centred about the longitudinal turning axis (100), and in that, in each working position of the plough, an arm (9-14) is situated opposite each means (4, 5, 6) for fixing the end-piece (7) to the hitching system, the said certain guiding and rolling members (25, 27) being mounted on this arm.

2. Device for connecting the hitching system of a tractor and the beam of a mounted or semi-mounted reversible plough according to Claim 1, characterized in that the arms supporting the beam are in the form of two shells (16) and (17) separated by a spacer member (19) in the region of the end-piece (7) and provided with means for holding and guiding the beam (18) which is clamped between the said shells (16) and (17), each shell having a cylindrical portion (40, 47) arranged in the end-piece (7) opposite the roller track

3. Device for connecting the hitching system of a tractor and the beam of a mounted or semi-mounted reversible plough according to Claim 2, characterized in that the members ensuring connection between the roller track of the end-piece (7), which has a U cross-section, and the support for the beam (18) consist, on the one hand, of guiding members (25), of the ball bearing type, which are in contact with the base of the U and mounted in brackets (26) integral with the cylindrical portions (40, 41) of the shells (16) and (17) and, on the other hand, of guiding members (27), of the ball bearing type, which are in contact with the sides of the U and mounted on pivot pins (28) integral with the cylindrical portions (40, 41) of the shells (16) and (17).

4. Device for connecting the hitching system of a tractor and the beam of a mounted or semi-mounted reversible plough according to Claim 2, characterized in that the members ensuring connection between the roller track of the end-piece (7), which has a U cross-section, and the beam support consist, on the one hand, of guiding members (27), of the ball bearing type, which are in contact with the sides of the U and mounted on pivot pins (28) integral with the cylindrical portions (40, 41) of the shells (16) and (17) and, on the other hand, of a hub (106) supported by a centring structure consisting of arms (107) integral with the end-piece (7) and co-operating with a centring shaft (105) integral with the spacer member (19) and freely translatable inside the hub (106).

5. Device for connecting the hitching system of a tractor and the beam of a mounted or semi-mounted reversible plough, according to either one of Claims 3 or 4, characterized in that the guiding members (27) consist of bogies mounted on the pivot pins (28), the bogies being provided with ball-type rolling bearings.

6. Device for connecting the hitching system of a tractor and the beam of a mounted or semi-mounted reversible plough, according to any one of Claims 1 to 5, characterized in that the members (4, 5, 6) for fixing the end-piece (7) are arranged directly on the circumference of the roller track.

7. Device for connecting the hitching system of a tractor and the beam of a mounted or semi-mounted reversible plough, according to any one of Claims 7 to 5, characterized in that the members (4, 5, 6) for fixing the. end-piece are arranged on an adapter device, enclosing the roller track, which consists of two flanges (151) and (152) welded-on either side of the roller track and of lateral strengthening strips (153) arranged between the said flanges and the said fixing members.

8. Device for connecting the hitching system of a tractor and the beam of a mounted or semi-mounted reversible plough, according to any one of Claims 2 to 7, characterized in that the beam (18) is held and guided between - the two shells (16) and (17), on the one hand, by means which are arranged in the region of the end-piece (7) and act on the end of the beam (18) and, on the other hand, by means which are arranged at the end of the shells (16) and (17) and act on a main pin (21) integral with the beam (18).

9. Device for connecting the hitching system of a tractor and the beam of a mounted or semi-mounted reversible plough according to Claim 8, characterized in that the means arranged at the end of the shells (16) and (17) consist of a device for transversely displacing the beam (18) inside a groove (117) at the end of the shells, by means of a nut-and-bolt system acting on cover plates (122) integral with the main pin (21).

10. Device for connecting the hitching system of a tractor and the beam of a mounted or semi-mounted reversible plough, according to either one of Claims 8 or 9, characterized in that the means arranged in the region of the end-piece (7) consist of a jack (150) arranged between the part (702) of the spacer member (19) and the end (108) of the beam.

11. Device for connecting the hitching system of a tractor and the beam of a mounted or semi-mounted reversible plough according to either one of Claims 8 or 9, characterized in that the means arranged in the region of the end-piece (7) consist of a connecting rod (13) arranqed substantially parallel to the lonqitudinal turning axis (100), between the part (102) of the spacer member (19) and an arm (14) integral with the beam (18), the connecting rod (13) being situated opposite the end (108) of the beam relative to the said axis (100).

12. Device for connecting the hitching system of a tractor and the beam of a mounted or semi-mounted reversible plough, according to any one of Claims 7 to 77, characterized in that the end-piece (7) is integrally fixed to the hitching system of the tractor by means of a hitching bar (22) having a central part in the form of an arc of a circle matching the lower contour of the end-piece (7).

13. Ploughing assembly consisting of a reversible plough arranged at the front of the tractor and a reversible plough arranged at the rear of the tractor, characterized in that the devices at the front and the rear for connecting the hitching systems and the front and rear beams are according to any one of Claims 1 to 12.

14. Ploughing assembly according to Claim 13, characterized in that the device for connecting the front-plough consists of shells which are offset laterally in relation to the longitudinal turning axis (100) and receive a beam provided with a side structural member (42) clamped between the ends of the shells and supporting the main pin (21).

15. Method of mounting a device for connecting the hitching system of a tractor and the beam of a mounted or semi-mounted reversible plough, of the type according to any one of Claims 2 to 14, characterized in that it consists in inserting, in turn, the shells (16) and (17) into the hitching end-piece (7) by positioning the guiding members in the roller track, and in then separating the said shells and then positioning them by means of the said spacer member (19).

fig.1

fig.2

fig.3

fig.4

fig.5

fig.6

fig. 7

0 110 788

fig.8

fig.9

fig.10

fig.11

11

Fig. 12

Fig. 13

fig. 14